# FASCICULE DE BREVET EUROPEEN

(11) **EP 1 873 389 B1**
(45) Date de publication et mention de la délivrance du brevet: **12.08.2009**
(21) Numéro de dépôt: 07109797.6
(22) Date de dépôt: 07.06.2007
(51) Int. Cl.: F02K 1/38, F02K 1/48

(54) **Capot pour tuyère de turbomachine, et tuyère et turbomachine associées**
Haube für die Düse eines Strahltriebwerks und entsprechende Düse und Strahltriebwerk
Turbomachine nozzle cowl, and corresponding nozzle and turbomachine

(30) Priorité: 26.06.2006 FR 0652643
(43) Date de publication de la demande: 02.01.2008
(73) Titulaire: SNECMA, 75015 Paris (FR)
(72) Inventeur: Au, Dax, 94200, Ivry sur Seine (FR); Bigot, Pascal Moïse Michel, 77950 Moisenay (FR); Briend, Pierre, 37000, Tours (FR); Loheac, Pierre, Philippe, Marie, 77170, Brie Comte Robert (FR)
(74) Mandataire: Boura, Olivier

(56) Documents cités:
- WO-A-00/53915
- FR-A- 2 857 416
- FR-A- 2 873 166
- US-A1- 2002 164 249
- US-A1- 2003 213 227
- US-B2- 6 532 729

## Description

### Arrière-plan de l'invention

La présente invention se rapporte au domaine général de la réduction de bruit de jet en sortie d'une tuyère de turbomachine. Elle vise plus particulièrement un capot pour tuyère de turbomachine de type à flux séparés qui est muni de motifs pour réduire le bruit de jet.

La pollution sonore est devenue aujourd'hui l'un des sujets de préoccupation pour les motoristes qui sont de plus en plus confrontés à la nuisance acoustique de leurs turbomachines. Les sources de bruit d'une turbomachine sont nombreuses mais il a été constaté que le bruit de jet en sortie de tuyère est le bruit prédominant lors de la phase de décollage d'un avion. Les autorités de certification étant de plus en plus exigeantes face aux émissions acoustiques des turbomachines, des efforts ont été demandés aux motoristes pour réduire le bruit de leurs turbomachines, et notamment le bruit de jet en sortie de tuyère.

Typiquement, une tuyère à flux séparés de turbomachine se compose d'un capot primaire centré sur l'axe longitudinal de la turbomachine, d'un capot secondaire disposé concentriquement autour du capot primaire de façon à définir un premier canal annulaire pour l'écoulement d'un flux externe (ou flux froid), et d'un corps central disposé concentriquement à l'intérieur du capot primaire de façon à définir un second canal annulaire pour l'écoulement d'un flux interne (ou flux chaud), le capot primaire s'étendant au-delà du capot secondaire.

Dans une telle tuyère, le bruit de jet provient des mélanges entre les flux froid et chaud et entre le flux froid et l'air externe contournant la tuyère. Ce bruit est un bruit à large bande de fréquence généré par deux types de source acoustique : un bruit à haute fréquence provenant de petites structures turbulentes du mélange entre les flux chaud et froid et perçu essentiellement près de la tuyère ; et un bruit à basse fréquence provenant des grosses structures tourbillonnaires apparaissant loin du jet.

Pour réduire le bruit de jet, l'un des moyens utilisés est d'augmenter efficacement le mélange entre ces flux. A cet effet, il est bien connu de munir l'un des capots de la tuyère d'une pluralité de motifs répétitifs répartis sur toute la circonférence du bord de fuite du capot. Par la mise en place de tels motifs sur le bord de fuite du capot de la tuyère, le mélange entre les flux s'effectue par la création de tourbillons (ou vortex) près de la tuyère pour mieux dissiper l'énergie cinétique, et par conséquent réduire l'intensité turbulente des gros tourbillons constituant les sources de bruit majeures.

Par exemple, le brevet US 6,532,729 prévoit de munir le bord de fuite des capots primaire et secondaire de la tuyère d'une pluralité de motifs répétitifs de forme triangulaire (appelés chevrons) qui permettent de favoriser le mélange entre les flux chaud et froid. De même, la publication US 2002/0164249-A1 propose de munir le bord de fuite des capots primaire et secondaire de la tuyère d'une pluralité de motifs répétitifs de forme trapézoïdale (appelés créneaux).

Bien que favorisant le mélange entre les flux, les motifs évoqués ci-dessus ne sont pas entièrement satisfaisants. En effet, même si de tels motifs permettent de diminuer la composante à basse fréquence du bruit de jet, cela est généralement réalisé au détriment de sa composante à haute fréquence qui reste à un niveau trop élevé.

### Objet et résumé de l'invention

La présente invention a donc pour but principal de pallier de tels inconvénients en proposant une forme géométrique de motifs à réduction de bruit de jet pour capot de tuyère de turbomachine permettant de diminuer à la fois les composantes à basse et haute fréquence du bruit de jet.

Ce but est atteint grâce à un capot annulaire pour tuyère de turbomachine, comportant une pluralité de motifs disposés dans le prolongement d'un bord de fuite dudit capot et espacés circonférentiellement les uns des autres, chaque motif ayant un contour de forme sensiblement triangulaire avec une base formée par une partie du bord de fuite du capot et un sommet espacé vers l'aval de la base et raccordé à celle-ci par deux côtés, et dans lequel, pour chaque motif, le sommet présente un contour sensiblement courbe, chaque côté se raccorde au bord de fuite du capot selon un contour sensiblement courbe à rayon de courbure supérieur ou égal à celui du contour du sommet, et dans lequel, conformément à l'invention, le contour de chacun des côtés comporte au moins un point d'inflexion à tangente sensiblement parallèle à la base.

Pour les raisons suivantes, une telle géométrie de motif à forme sensiblement triangulaire permet d'obtenir les résultats recherchés. Un simple motif triangulaire tel que décrit dans l'art antérieur créé deux tourbillons contrarotatifs formés de part et d'autre d'un plan radial de symétrie du motif. Or, les caractéristiques géométriques du motif selon l'invention permettent de « ramener » les tourbillons vers le sommet du motif qui est la zone où le cisaillement entre les flux est le plus élevé. Il en résulte un meilleur mélange entre les flux et donc une diminution du bruit de jet dans les basses et hautes fréquences.

Selon une disposition avantageuse, le sommet d'au moins l'un des motifs est incliné radialement vers l'intérieur du capot.

Selon une autre disposition avantageuse, chaque motif est entièrement situé dans un même plan.

Selon encore une autre disposition avantageuse, les points d'inflexion de chaque motif sont situés dans une zone comprise entre 40% et 60% de la hauteur dudit motif.

Au moins l'un des motifs peut présenter une symétrie par rapport à un plan passant par l'axe de révolution du capot et le sommet dudit motif.

L'invention a également pour objet une tuyère de turbomachine dont le capot primaire et/ou le capot secondaire est un capot tel que défini précédemment.

L'invention a encore pour objet une turbomachine comportant au moins un capot tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique en perspective d'une tuyère de turbomachine équipée d'un capot selon un mode de réalisation de l'invention ;
- la figure 2 est une vue élargie d'un motif à réduction de bruit de jet du capot de la figure 1 ;
- la figure 3 est une vue identique à celle de la figure 2 montrant les tourbillons générés par la forme particulière du motif ;
- la figure 4 est une vue de côté du motif de la figure 2 ; et
- la figure 5 est un graphique montrant des courbes comparatives de bruit engendré par des tuyères à flux séparés.

### Description détaillée d'un mode de réalisation

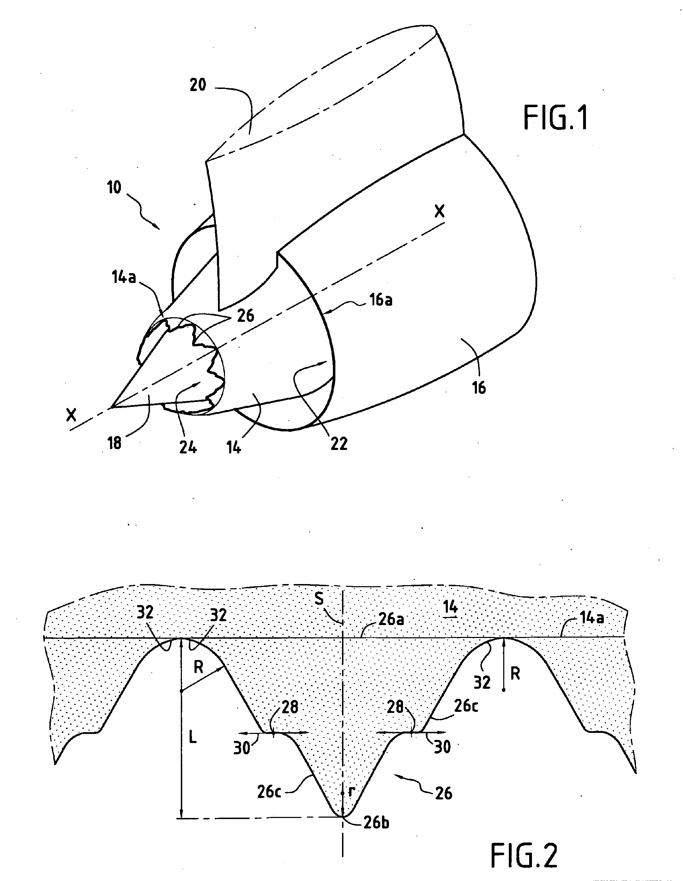

La figure 1 représente, de façon très schématique et en perspective, une tuyère 10 à flux séparés de turbomachine.

La tuyère 10, de forme axisymétrique par rapport à son axe longitudinal X-X, est typiquement formée d'un capot primaire 14, d'un capot secondaire 16 et d'un corps central 18 qui sont centrés sur l'axe longitudinal X-X de la tuyère.

Le capot primaire 14, de forme sensiblement cylindrique ou tronconique, s'étend selon l'axe longitudinal X-X de la tuyère. Le corps central 18 est disposé concentriquement à l'intérieur du capot primaire 14 et se termine par une partie sensiblement conique.

Le capot secondaire 16, également de forme sensiblement cylindrique ou tronconique, entoure le capot primaire 14 tout en lui étant concentrique et s'étend également selon l'axe longitudinal X-X de la tuyère. Le capot primaire 14 s'étend longitudinalement vers l'aval au-delà du capot secondaire 16.

On notera que, sur l'exemple de réalisation de la figure 1, le corps central 18 de la tuyère 10 est de type externe, c'est à dire que le corps central 18 s'étend longitudinalement au-delà du bord de fuite 14a du capot primaire 14.

Toutefois, l'invention peut également s'appliquer à une tuyère à flux séparés de type interne dans laquelle le bord de fuite du capot primaire s'étend longitudinalement au-delà du corps central de façon à recouvrir complètement ce dernier. De même, l'invention peut aussi s'appliquer à une tuyère dite à flux mélangés dans laquelle le bord de fuite du capot secondaire s'étend longitudinalement au-delà de celui du capot primaire.

La tuyère à flux séparés ainsi définie est fixée sous une aile d'avion (non représentée sur les figures) par l'intermédiaire d'un pylône de support 20 s'appuyant sur le capot secondaire 16 de la tuyère et se prolongeant à l'intérieur du capot secondaire jusqu'au capot primaire 14.

L'assemblage concentrique des éléments de la tuyère 10 permet de définir, d'une part entre les capots primaire 14 et secondaire 16, un premier canal annulaire 22 pour l'écoulement de l'air issu de la turbomachine et appelé flux secondaire ou flux froid, et d'autre part, entre le capot primaire 14 et le corps central 18, un second canal annulaire 24 pour l'écoulement d'un flux gazeux interne issu de la turbomachine et appelé aussi flux primaire ou flux chaud.

Les flux primaire et secondaire s'écoulant dans ces deux canaux annulaires 22, 24 se mélangent entre eux au niveau d'un bord de fuite 14a du capot primaire 14. De même, le flux secondaire se mélange à un flux d'air externe contournant la tuyère au niveau d'un bord de fuite 16a du capot secondaire 16.

Au moins l'un des deux capots 14, 16 de la tuyère 10 comporte une pluralité de motifs 26 répétitifs qui sont destinés à réduire le bruit de jet en sortie de la tuyère.

Sur l'exemple de réalisation de la figure 1, les motifs 26 à réduction de bruit de jet sont disposés sur le capot primaire 14. Cependant, ils pourraient tout aussi bien être disposés seulement sur le capot secondaire 16 ou bien à la fois sur le capot primaire et le capot secondaire de la tuyère.

Les motifs 26 à réduction de bruit de jet sont disposés dans le prolongement du bord de fuite 14a du capot primaire 14 et sont régulièrement espacés les uns des autres dans le sens circonférentiel.

Comme représenté plus en détails sur la figure 2, chaque motif 26 présente un contour de forme générale sensiblement triangulaire avec une base 26a formée par une partie du bord de fuite 14a du capot 14, et un sommet 26b espacé vers l'aval de la base 26a et raccordé à celle-ci par deux côtés 26c.

Selon l'invention, chaque motif 26 à réduction de bruit présente un certain nombre de caractéristiques géométriques, à savoir : le sommet 26b présente un contour sensiblement courbe à rayon de courbure r ; chaque côté 26c se raccorde au bord de fuite 14a du capot 14 selon un contour sensiblement courbe à rayon de courbure R supérieur ou égal à celui (r) du contour du sommet 26b ; et le contour de chacun des côtés 26c comporte au moins un point d'inflexion 28 à tangente 30 sensiblement parallèle à la base 26a.

Par point d'inflexion, on entend un point régulier du contour des côtés 26c où ce contour traverse sa tangente 30.

Sur l'exemple de réalisation de la figure 2, la référence 32 désigne le raccord courbé entre chaque côté 26c du motif 26 et le bord de fuite 14a du capot 14. On notera que les profils de ces raccords 32 sont continus avec ceux des raccords entre les motifs adjacents et le bord de fuite du capot.

Ainsi, lorsque le raccord 32 possède un rayon de courbure R, le sommet 26b du motif 26 présente un rayon de courbure r qui est inférieur ou égal (R ≥ r). A titre d'exemple, le rayon de courbure R peut être entre 2 à 5 fois supérieur au rayon r.

Toujours sur l'exemple de réalisation de la figure 2, on voit que chaque côté 26c du motif 26 présente un point d'inflexion 28 dont la tangente 30 est sensiblement parallèle à la base 26a du motif. La présence d'un tel point d'inflexion 28 a pour conséquence de créer une rupture de pente du contour de chaque côté 26c du motif : chaque côté se présente donc sous la forme de deux portions de courbe à profil sensiblement parabolique qui sont reliées entre elles par le point d'inflexion 28.

Il est possible d'imaginer que chaque côté du motif à réduction de bruit présente plusieurs points d'inflexion (par exemple deux) ayant chacun une tangente sensiblement parallèle à la base dudit motif.

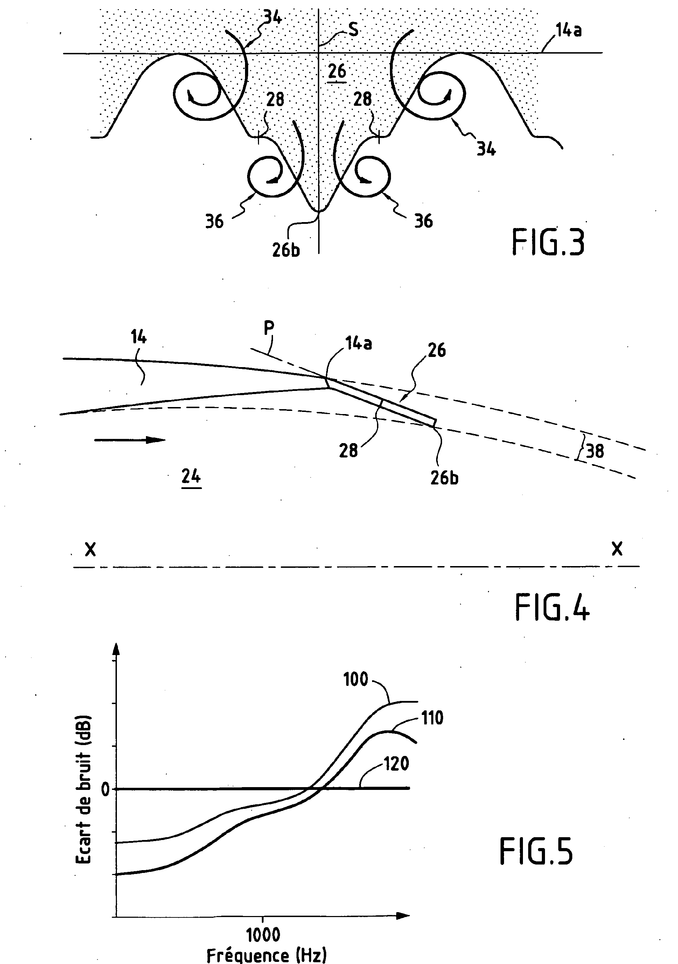

La figure 3 illustre les tourbillons générés par la géométrie particulière de tels motifs 26 à réduction de bruit. Sur cette figure, on constate que deux tourbillons principaux contrarotatifs 34 sont créés au niveau des zones de raccordement entre le motif 26 et le bord de fuite 14a du capot, et que deux tourbillons secondaires contrarotatifs 36 apparaissent entre les points d'inflexion 28 et le sommet 26b des motifs.

Ces tourbillons secondaires 36, d'intensité moins importante que les tourbillons principaux 34, indiquent qu'une telle géométrie de motif à réduction de bruit permet de « ramener » l'écoulement tourbillonnaire vers le sommet 26b de celui-ci, améliorant ainsi le mélange entre les flux interne et externe au capot.

Selon une caractéristique avantageuse de l'invention, le sommet 26b d'au moins l'un des motifs 26 est incliné radialement vers l'intérieur du capot 14.

Cette caractéristique est particulièrement visible sur la figure 4 qui représente selon une vue de côté un motif 26 à réduction de bruit de jet disposé dans le prolongement du bord de fuite 14a du capot primaire 14 de la tuyère. Sur cette figure, on constate que le sommet 26b du motif 26 est bien décalé radialement vers l'intérieur du capot 14 par rapport au bord de fuite 14a de ce dernier. En d'autres termes, le motif 26 pénètre radialement dans le canal annulaire 24 d'écoulement du flux chaud.

Par ailleurs, on notera que l'inclinaison radiale du motif 26 est de préférence limitée de façon à ce que le motif se situe à l'intérieur d'une couche limite 38 générée par l'écoulement des flux gazeux autour du profil du capot 14.

Selon une autre caractéristique avantageuse de l'invention également illustrée sur la figure 4, le motif 26 à réduction de bruit de jet est entièrement situé dans un même plan P.

Ainsi, la base, le sommet 26b et les points d'inflexion 28 du motif 26 sont de préférence situés dans le même plan P. En particulier, il n'y a de préférence aucune inclinaison dans le sens radial des points d'inflexion 28 par rapport au sommet 26b ou à la base du motif 26.

Selon encore une autre caractéristique avantageuse de l'invention, les points d'inflexion 28 de chaque motif 26 à réduction de bruit de jet sont situés dans une zone comprise entre 40% et 60% de la hauteur L dudit motif (la hauteur L représentée sur la figure 2 correspond à la plus courte distance séparant la base 26a du sommet 26b du motif).

En outre, comme représenté sur les figures 2 et 3, chaque motif 26 à réduction de bruit de jet peut être symétrique par rapport à un plan S passant par l'axe longitudinal de la tuyère et le sommet 26b dudit motif. Il résulte d'une telle symétrie que les points d'inflexion 28 de chacun des côtés 26c du motif 26 sont situés à une même hauteur et que les côtés ont un même profil parabolique.

En revanche, on notera qu'il n'existe pas de symétrie de chaque côté 26c du motif 26 par rapport à un plan passant par la tangente 30 du point d'inflexion et perpendiculaire à l'axe longitudinal X-X de la tuyère.

Des simulations numériques du niveau de bruit engendré par une tuyère à flux séparés dont le capot primaire est équipé de motifs à réduction de bruit selon l'invention ont été réalisées. Les résultats de ces simulations sont représentés dans le graphique comparatif de la figure 5.

Le graphique de cette figure illustre, sous forme de courbes, les écarts de bruit en décibels en fonction de la fréquence pour une tuyère dont le capot primaire est muni de motifs à réduction de bruit ayant une forme simplement triangulaire (courbe 100) et pour une tuyère dont le capot primaire est muni de motifs à réduction de bruit selon l'invention (courbe 110). Les écarts de bruit sont calculés par rapport à une courbe 120 correspondant au bruit engendré par une tuyère à flux séparés dont le capot primaire est dépourvu de motifs à réduction de bruit.

De ce graphique, on constate que l'utilisation de motifs à réduction de bruit selon l'invention permet de diminuer le bruit à basse fréquence (inférieur à 1000 Hz environ), non seulement par rapport à une tuyère dépourvue de motifs (courbe 120) mais également par rapport à une tuyère dont le capot primaire est équipé de motifs simplement triangulaires (courbe 100). La géométrie particulière des motifs selon l'invention a pour autre avantage de limiter l'augmentation de la composante à haute fréquence du bruit (supérieure à 1000 Hz environ) par rapport aux motifs triangulaires classiques.

## Revendications

1. Capot annulaire (14, 16) pour tuyère (10) de turbomachine, comportant une pluralité de motifs (26) disposés dans le prolongement d'un bord de fuite (14a, 16a) dudit capot et espacés circonférentiellement les uns des autres, chaque motif (26) ayant un contour de forme sensiblement triangulaire avec une base (26a) formée par une partie du bord de fuite du capot et un sommet (26b) espacé vers l'aval de la base et raccordé à celle-ci par deux côtés (26c), tel que, pour chaque motif (26) :
- le sommet (26b) présente un contour sensiblement courbe ;
- chaque côté (26c) se raccorde au bord de fuite (14a, 16a) du capot (14, 16) selon un contour sensiblement courbe à rayon de courbure (R) supérieur ou égal à celui (r) du contour du sommet (26b) ; et **caractérisé en ce que**
- le contour de chacun des côtés (26c) comporte au moins un point d'inflexion (28) à tangente (30) sensiblement parallèle à la base (26a).

2. Capot selon la revendication 1, dans lequel le sommet (26b) d'au moins l'un des motifs (26) est incliné radialement vers l'intérieur du capot (14, 16).

3. Capot selon l'une des revendications 1 et 2, dans lequel chaque motif (26) est entièrement situé dans un même plan (P).

4. Capot selon l'une quelconque des revendications 1 à 3, dans lequel les points d'inflexion (28) de chaque motif (26) sont situés dans une zone comprise entre 40% et 60% de la hauteur (L) dudit motif.

5. Capot selon l'une quelconque des revendications 1 à 4, dans lequel au moins l'un des motifs (26) présente une symétrie par rapport à un plan (S) passant par l'axe de révolution (X-X) du capot (14, 16) et le sommet (26b) dudit motif.

6. Tuyère (10) de turbomachine, comportant un capot primaire (14) disposé selon un axe longitudinal (X-X) de la tuyère et un capot secondaire (16) disposé concentriquement autour du capot primaire (14), **caractérisée en ce que** le capot primaire (14) et/ou le capot secondaire (16) est un capot selon l'une quelconque des revendications 1 à 5.

7. Turbomachine comportant une tuyère (10) ayant au moins un capot (14, 16) selon l'une quelconque des revendications 1 à 5.

## Claims

1. An annular cover (14, 16) for a turbomachine nozzle (10), the cover having a plurality of patterns (26) extending a trailing edge (14a, 16a) of said cover and spaced apart circumferentially from one another, each pattern (26) having an outline that is substantially triangular in shape, with a base (26a) formed by a portion of the trailing edge of the cover and a vertex (26b) spaced downstream from the base and connected thereto by two sides (26c), so that, for each pattern (26):
· the vertex (26b) presents an outline that is substantially curved;
· each side (26c) is connected to the trailing edge (14a, 16a) of the cover (14, 16) following an outline that is substantially curved having a radius of curvature (R) that is greater than or equal to the radius of curvature (r) of the outline of the vertex (26b); and **characterized in that**
· the outline of each of the sides (26c) includes at least one point of inflexion (28) having a tangent (30) that is substantially parallel to the base (26a).

2. A cover according to claim 1, in which the vertex (26b) of at least one of the patterns (26) is inclined radially towards the inside of the cover (14, 16).

3. A cover according to claim 1 or 2, in which each pattern (26) is situated entirely in a single plane (P).

4. A cover according to any one of claims 1 to 3, in which the points of inflexion (28) of each pattern (26) are situated in a zone lying in the range comprised between 40% to 60% of the height (L) of said pattern.

5. A cover according to any one of claims 1 to 4, in which at least one of the patterns (26) presents symmetry about a plane (S) containing the axis of symmetry (X-X) of the cover (14, 16) and the vertex (26b) of said pattern.

6. A turbomachine nozzle (10) including a primary cover (14) disposed about a longitudinal axis (X-X) of the nozzle and a secondary cover (16) disposed coaxially about the primary cover(14), **characterized in that** the primary cover (14) and/or the secondary cover (16) is/are a cover according to any one of claims 1 to 5.

7. A turbomachine including a nozzle (10) having at least one cover (14, 16) according to any one of claims 1 to 5.

## Patentansprüche

1. Ringförmige Verkleidung (14, 16) für eine Düse (10) einer Turbomaschine, mit einer Vielzahl von Mustern (26), die in der Verlängerung einer Austrittskante (14a, 16a) der Verkleidung angeordnet und in Umfangsrichtung voneinander beabstandet sind, wobei jedes Muster (26) eine im wesentlichen dreieckförmige Kontur aufweist, mit einer von einem Teil der Austrittskante der Verkleidung gebildeten Basis (26a) und einer Spitze (26b), die stromabwärts von der Basis beabstandet und mit dieser über zwei Seiten (26c) verbunden ist, derart, daß für jedes Muster (26):
- die Spitze (26b) eine im wesentlichen gebogene Kontur aufweist,
- jede Seite (26c) sich entlang einer im wesentlichen gebogenen Kontur, deren Krümmungsradius (R) größer oder gleich demjenigen (r) der Kontur der Spitze (26b) ist, an die Austrittskante (14a, 16a) der Verkleidung (14, 16) anschließt, und
**dadurch gekennzeichnet, daß**
- die Kontur einer jeden der Seiten (26c) wenigstens einen Wendepunkt (28) mit im wesentlichen parallel zur Basis (26a) verlaufender Tangente (30) aufweist.

2. Verkleidung nach Anspruch 1, bei der die Spitze (26b) von wenigstens einem der Muster (26) radial zum Inneren der Verkleidung (14, 16) geneigt ist.

3. Verkleidung nach einem der Ansprüche 1 und 2, bei der jedes Muster (26) vollständig in einer gleichen Ebene (P) gelegen ist.

4. Verkleidung nach einem der Ansprüche 1 bis 3, bei der die Wendepunkte (28) eines jeden Musters (26) sich in einem Bereich zwischen 40 % und 60 % der Höhe (L) des Musters befinden.

5. Verkleidung nach einem der Ansprüche 1 bis 4, bei der wenigstens eines der Muster (26) zu einer durch die Rotationsachse (X-X) der Verkleidung (14, 16) und die Spitze (26b) des Musters verlaufende Ebene (S) symmetrisch ist.

6. Düse (10) einer Turbomaschine, mit einer entlang einer Längsachse (X-X) der Düse angeordneten primären Verkleidung (14) und einer um die primäre Verkleidung (14) konzentrisch angeordneten sekundären Verkleidung (16), **dadurch gekennzeichnet, daß** die primäre Verkleidung (14) und/oder die sekundäre Verkleidung (16) eine Verkleidung nach einem der Ansprüche 1 bis 5 ist.

7. Turbomaschine mit einer Düse (10), die wenigstens eine Verkleidung (14, 16) nach einem der Ansprüche 1 bis 5 aufweist.
